# EUROPEAN PATENT APPLICATION

(11) **EP 4 765 253 A1**
(43) Date of publication of application: **24.06.2026**
(21) Application number: 24856073.2
(22) Date of filing: 04.04.2024
(51) Int. Cl.: H01M 4/62, B29C 48/07, B29C 48/40, C08J 3/215, C08K 3/04, C08K 3/08, C08K 7/06, C08L 23/06, C08L 23/12, C08L 67/03, C08L 101/00, H01M 4/13

(54) **BATTERY MATERIAL, METHOD FOR MANUFACTURING BATTERY MATERIAL, AND SYSTEM FOR MANUFACTURING BATTERY MATERIAL**

(30) Priority: 18.08.2023 JP 2023133475
(71) Applicant: The Japan Steel Works, Ltd., Tokyo 141-0032 (JP)
(72) Inventor: UEDA, Naoki, Tokyo 141-0032 (JP); NAKAMURA, Satoru, Tokyo 141-0032 (JP); FURUKI, Kenichi, Tokyo 141-0032 (JP); HIRAMATSU, Seiya, Tokyo 141-0032 (JP)
(74) Representative: Simmons & Simmons LLP (Munich)
(86) International application number: PCT/JP2024/013878
(87) International publication number: WO 2025/041377

(57) **Abstract**

The present invention provides a battery material excellent in conductivity, a method for manufacturing the battery material, and a system for manufacturing the battery material. A battery material according to the present disclosure includes a resin and a conductor kneaded into the resin. The conductor includes particles of a non-supported catalyst and nanocarbon formed by growing from the particles.

## Description

### Technical Field

The present invention relates to a battery material, a battery material manufacturing method, and a battery material manufacturing system.

### Background Art

Next-generation batteries such as semi-solid lithium ion batteries and all-solid-state lithium ion batteries have been developed. These batteries include a conductive filler formed of nanocarbon as a conductive auxiliary material in order to improve conductivity.

Patent Literature 1 discloses a method for manufacturing nanocarbon. According to this technique, a reaction device introduces a catalyst and lower hydrocarbon into a feeder body, and a screw conveys, inside the feeder body, the nanocarbon as a result of thermal decomposition of the catalyst and the lower hydrocarbon.

### Citation List

### Patent Literature

[Patent Literature 1] Japanese Unexamined Patent Application Publication No. 2006-290682

### Summary of Invention

In order to continuously manufacture a battery material including a conductive auxiliary material, it is required to mix a conductive filler, which includes the aforementioned nanocarbon and metal particles, with an active material and a binder, to mold the mixture. In order to manufacture a battery material that achieves satisfactory performance as a battery, it is desired that each conductive filler be uniformly dispersed in the battery material at an appropriate density while maintaining its conductivity. However, it is not easy to continuously manufacture a battery material to which a plurality of kinds of conductive fillers are efficiently added.

The present disclosure has been made in order to solve such a problem, and provides a battery material having excellent conductivity, a battery material manufacturing method, and a battery material manufacturing system.

A battery material according to one embodiment of the present disclosure includes a resin and a conductor kneaded into the resin, in which the conductor contains particles of an unsupported catalyst and nanocarbon formed by growing from the particles.

A battery material manufacturing method according to one embodiment of the present disclosure includes: processing for causing non-oxidation gas to contact a metal precursor M1 to continuously manufacture an unsupported catalyst; processing for causing lower hydrocarbon to contact the unsupported catalyst and causing nanocarbon to grow on a surface of the unsupported catalyst, to thereby manufacture a conductor; processing for supplying at least each of the conductor and a resin to a supply port of an extruder; and processing for kneading the conductor and the resin by a screw of the extruder to generate a kneaded material. Further, the battery material manufacturing method includes: processing for sending out the kneaded material that has been kneaded from a sending-out port of the extruder as a battery material; processing for expanding the kneaded material that has been sent out into a sheet shape to mold the expanded kneaded material; and processing for extending the molded sheet to decrease a thickness of the kneaded material.

A battery material manufacturing system according to one embodiment of the present disclosure includes a material reception port, a screw, and a kneaded material sending-out port. The material reception port receives a conductor and a resin. The screw extrudes the conductor and the resin that have been received on a downstream side while kneading them. The kneaded material sending-out port sends out a kneaded material obtained by kneading the conductor and the resin on the downstream side. Further, the material reception port receives the conductor generated by causing nanocarbon to grow on an unsupported catalyst in such a way that a rate of the conductor becomes 5 to 90 wt%.

According to the present disclosure, it is possible to provide a battery material having excellent conductivity, a battery material manufacturing method, and a battery material manufacturing system.

### Brief Description of Drawings

Fig. 1 is a diagram showing a configuration of a conductor;
Fig. 2 is a diagram showing a configuration of a battery material;
Fig. 3 is a diagram showing an outline of a configuration of a battery material manufacturing system according to a first embodiment;
Fig. 4 is an overview configuration diagram of a reaction system according to the first embodiment;
Fig. 5 is a cross-sectional view of a connection block;
Fig. 6 is a flowchart showing processing performed by the reaction system;
Fig. 7 is an overview configuration diagram of a kneading system in a third process block;
Fig. 8 is a flowchart showing processing in the third process block;
Fig. 9 is an overview configuration diagram of a molding system in a fourth process block;
Fig. 10 is a flowchart showing processing in the fourth process block;
Fig. 11 is a configuration diagram of a reaction system according to a second embodiment;
Fig. 12 is a configuration diagram of a reaction system according to a third embodiment;
Fig. 13 is a diagram showing a plurality of regions included in a reaction system 100B; and
Fig. 14 is a diagram for describing a flow of a fluid in a fluid supply port.

### Description of Embodiments

Hereinafter, the present disclosure will be described through embodiments of the disclosure, but the invention set forth in claims is not limited to the following embodiments. Furthermore, not all of the configurations described in the embodiments are essential as means for solving problems. For clarity, the following descriptions and drawings have been omitted and simplified as appropriate. In each drawing, the same elements have the same reference signs, and repeated descriptions have been omitted as necessary.

### <First Embodiment>

Hereinafter, with reference to the drawings, a first embodiment will be described. A battery material manufacturing system according to this embodiment manufactures a material for constituting a predetermined battery (that is, a battery material). The predetermined battery is, for example, a lithium ion battery as a type of a semi-solid battery or an all-solid-state battery.

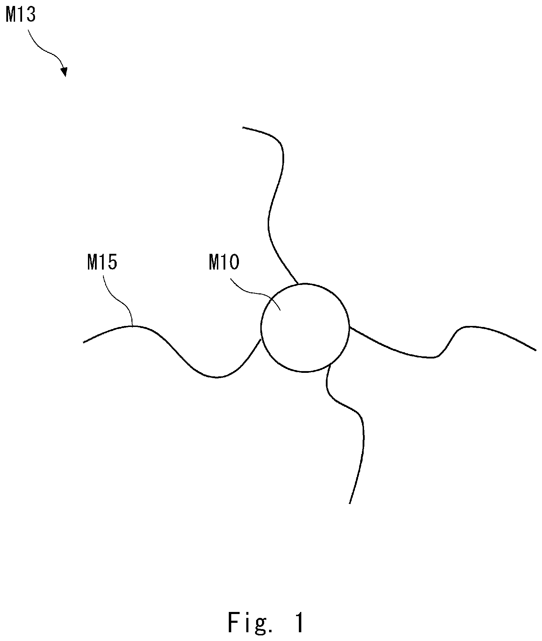

Fig. 1 is a schematic view showing a configuration of a conductor M13 as a battery material according to the embodiment. The conductor M13 includes a catalyst M10 and nanocarbon M15. The nanocarbon M15, which is nanocarbon that grows directly from a surface of the catalyst M10 as a starting point, has a fibrous form. More specifically, the nanocarbon M15 is, for example, a carbon nanotube (or a CNT).

The conductor M13 can be manufactured by using powder of a metal precursor M1 and lower hydrocarbon gas as raw materials. That is, the conductor M13 does not contain a catalyst carrier such as porous ceramics, and nanocarbon is directly bonded to a surface of high-purity metal particles formed by using the metal precursor M1 as a raw material. Accordingly, the conductor M13 has a high metal purity and high conductivity. While the shape of the metal particles is not particularly limited, they preferably exhibit a mass form.

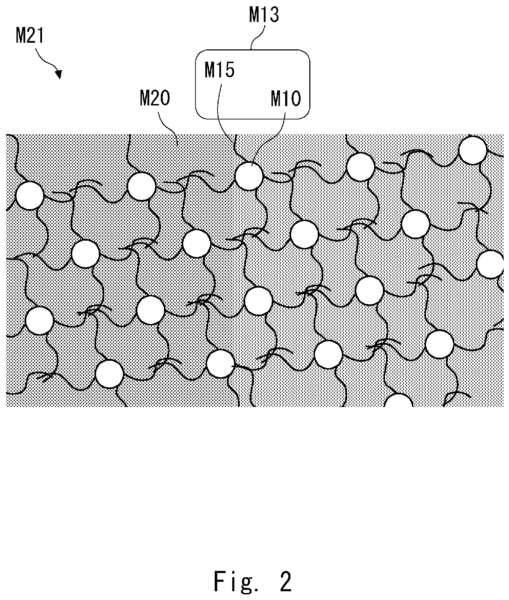

Next, with reference to Fig. 2, a battery material including a conductive resin M21 will be described. Fig. 2 is a diagram showing a configuration of the battery material. The conductive resin M21 is one embodiment of the battery material. The conductive resin M21 shown in Fig. 2 is in a state in which a resin M20 and the conductor M13 are mixed. That is, the conductive resin M21 exhibits a state in which a filler mixed with the resin M20 is connected to the catalyst M10 formed of metal granules and fibrous nanocarbon that grows from the surface of the catalyst M10, thereby forming a conductive network.

That is, the conductive resin M21, which is a battery material, includes the resin M20 and the conductor M13. The conductor M13 is kneaded into the resin M20. The conductor M13 includes particles of the unsupported catalyst M10 and nanocarbon formed by growing from the particles. Accordingly, the battery material according to the embodiment can be a battery material having excellent conductivity. The state of being unsupported indicates a state in which a ceramics carrier or the like for carrying a catalyst is not used, and the nanocarbon that grows from the unsupported catalyst M10 indicates nanocarbon that is generated on a surface of a catalyst that does not use a ceramics carrier or the like for carrying a catalyst and from which the catalyst M10 is not removed.

In the conductive resin M21, the structures of the nanocarbon M15 included in the plurality of respective conductors M13 are intricately entangled in a stereoscopic way. While the composition and the molecular weight of the resin M20 are not particularly limited, the resin M20 is preferably a thermoplastic resin, and more preferably the resin M20 includes at least one of polypropylene, polyethylene, polystyrene, polyimide, or polyethylene terephthalate.

At this time, in the conductive resin M21, the conductor M13 is kneaded, for example, into the resin at a rate of 5 to 90 wt%, and the remaining part is the resin M20. Accordingly, the battery material has preferable conductivity. Note that the conductor M13 may include, besides the resin M20, a battery member such as a solid electrolyte. Accordingly, the battery material further has preferable conductivity.

In the aforementioned battery material, the nanocarbon included in the conductor M13 is a multi-layer carbon nanotube that grows from an unsupported catalyst. Further, in the aforementioned battery material, the conductor M13 contain 5 volume % or more of carbon nanotubes having a length of 0.5 µm or more. Alternatively, the conductor M13 may contain 5 to 90 volume % of carbon nanotubes having a length of 0.5 to 30 µm. Accordingly, the battery material has preferable conductivity. The aforementioned battery material has, for example, a volume resistivity of less than 1 × 10⁶ Ω·m. Further, the aforementioned battery material has preferably a volume resistivity of less than 1 × 10³ Ω·m.

In the battery material, the unsupported catalyst M10 includes particles of a transition metal from Group 3 to Group 12. More preferably, the catalyst M10 may contain particles of nickel, iron, cobalt, or palladium. That is, conventionally, nanocarbon and metal particles have been separately added as a conductive filler. However, the battery material according to this embodiment includes a form in which metal particles connected to the nanocarbon are integrated. Therefore, with a battery material manufacturing method according to this embodiment, it is possible to provide a battery material having excellent characteristics by a simple manufacturing process. Therefore, with the battery material manufacturing method according to this embodiment, it may be possible to provide effects such as improved productivity and reduced power consumption and so on (production cost).

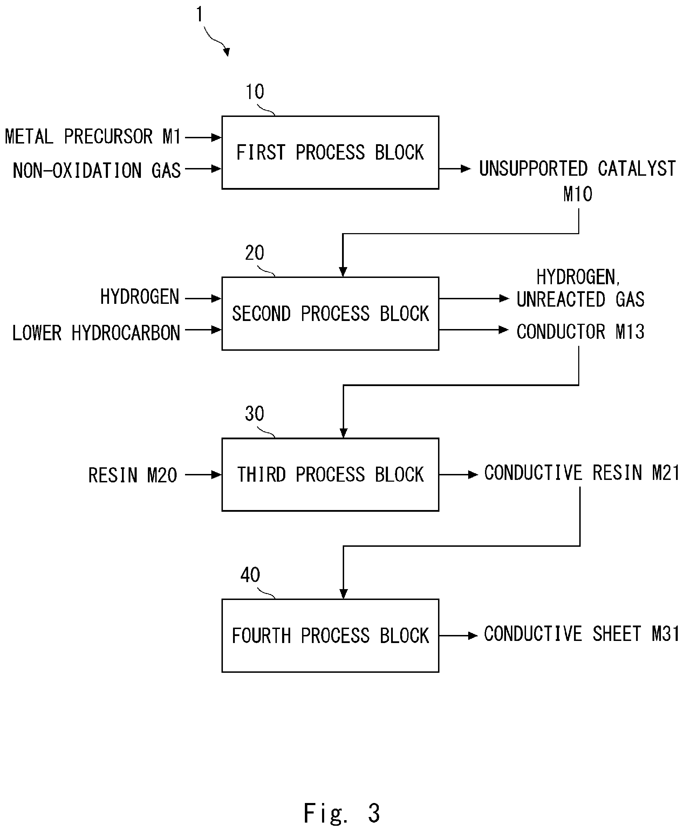

Next, with reference to Fig. 3, an outline of the battery material manufacturing system will be described. Fig. 3 is a diagram showing an outline of a configuration of the battery material manufacturing system according to the first embodiment. A battery material manufacturing system 1 shown in Fig. 3 includes a first process block 10, a second process block 20, a third process block 30, and a fourth process block 40.

The first process block 10 receives a metal precursor M1 and non-oxidation gas and generates an unsupported catalyst M10. The metal precursor M1 is one of a metal organic acid salt, a metal organic compound, or a metal inorganic compound. Note that the metal precursor M1 may be in a state of a mixture in which one of a metal organic acid salt, a metal organic compound, or a metal inorganic compound and an organic compound or an inorganic compound are mixed. Further, the metal generated from the metal precursor M1 is any one of transition metals from Group 3 to Group 12 in the periodic table. A typical example of the metal precursor M1 is nickel acetate tetrahydrate. The metal precursor M1 may include, besides nickel acetate, acetic acid.

The composition of the non-oxidation gas is not limited as long as it is gas that does not generate metal oxides of the unsupported catalyst M10 in the first process block 10. A typical example of the non-oxidation gas is hydrogen. In place of hydrogen, the non-oxidation gas may be argon, lower hydrocarbon, or sulfur hexafluoride. The non-oxidation gas may contain a plurality of kinds of the above gas.

Note that the lower hydrocarbon is, for example, methane. In place of methane, the lower hydrocarbon may be ethane, propane, butane, or the like. The lower hydrocarbon may be a mixture of a plurality of kinds such as methane, ethane, propane, or butane.

The unsupported catalyst M10 is a metal granule that is not carried by a catalyst carrier such as carbon or ceramics, and is particles of a transition metal from Group 3 to Group 12 in the periodic table. The particles preferably have, for example, a particle size of from about several nanometers to several hundred nanometers. A typical example of the unsupported catalyst M10 is nickel. In place of nickel, the unsupported catalyst M10 may be iron, cobalt, or palladium. The unsupported catalyst M10 may contain a plurality of kinds of nickel, iron, cobalt, or palladium.

Processing conditions in the first process block 10 will be described in more detail. The first process block 10 generates the unsupported catalyst M10 from the metal precursor M1 by processing the metal precursor M1 in stages in a temperature range from 100°C to 1000°C. Hereinafter, the temperature (°C) is expressed in degrees Celsius. The first process block 10 performs, as first processing, former processing for generating an intermediate compound by removing hydration water of the metal precursor M1 at 100°C to 400°C, and then performs, as second processing, later processing for decomposing the metal precursor M1 from which hydration water has been removed into metal at 400°C to 1000°C. When nickel acetate tetrahydrate is used as the metal precursor M1, the first processing is preferably performed at 100°C to 300°C and the second processing is preferably performed at 700°C to 1000°C. Further, in order to obtain a finer unsupported catalyst M10 with less aggregation, the temperature increase rate when the first processing moves to the second processing is preferably as high as possible. This temperature increase rate is, for example, 5°C/min to 100°C/min.

In the first process block, the residence time is separately set for each of the first processing and the second processing. For example, the residence time in the first processing is 10 to 180 minutes, and the residence time in the second processing is 10 to 150 minutes. In order to obtain a finer unsupported catalyst M10 with less aggregation, the residence time in the second processing is preferably as short as possible. More preferably, the residence time in the second processing is, for example, 10 to 60 minutes.

The unsupported catalyst M10 generated in the above first process block is supplied to the second process block 20. The supply of the unsupported catalyst M10 from the first process block to the second process block is performed in an atmosphere that is isolated from the outside air and is filled with non-oxidation gas.

The second process block 20 receives the unsupported catalyst M10 and the lower hydrocarbon to generate hydrogen and a conductor M13. Further, the second process block 20 discharges unreacted gas as well. The second process block 20 may receive, aside from lower hydrocarbon, hydrogen as well. By receiving hydrogen as well, the second process block 20 can maintain activity of the unsupported catalyst. Note that the lower hydrocarbon is, for example, methane. In place of methane, the lower hydrocarbon may instead be ethane, propane, butane, or the like. The lower hydrocarbon may be a mixture of a plurality of kinds such as methane, ethane, propane, or butane.

Processing conditions in the second process block 20 will be described in more detail. The second process block 20 generates a conductor from the unsupported catalyst by processing the unsupported catalyst in stages in a temperature range from 200°C to 1000°C. That is, the second process block 20 performs, as third processing, former processing for adjusting the activity of the unsupported catalyst by causing hydrogen to contact with the unsupported catalyst at 200°C to 500°C. Next, the second process block 20 performs, as fourth processing, later processing for generating nanocarbon on a surface of the unsupported catalyst by causing the unsupported catalyst whose activity has been adjusted to contact with the lower hydrocarbon at 500°C to 1000°C. When nickel is used as the unsupported catalyst, the temperature of the third processing is preferably from 250°C to 400°C, and the temperature of the fourth processing is preferably from 600°C to 900°C. Further, in order to prevent aggregation of the unsupported catalyst, the temperature increase rate when the third processing moves to the fourth processing is preferably as high as possible. The above temperature increase rate is, for example, 5°C/min to 100°C/min.

In the second process block, the residence time is separately set for each of the third processing and the fourth processing. The residence time is, for example, 10 to 120 minutes for the third processing, and 10 to 240 minutes for the fourth processing. The fiber length of the fibrous nanocarbon that grows from the unsupported catalyst M10 may be adjusted by the length of the residence time in the fourth processing. That is, the longer the set fourth residence time, the longer the fiber length of the obtained fibrous nanocarbon.

The conductor M13 generated in the above second process block includes particles of the unsupported catalyst M10, and a fibrous nanocarbon M15 formed by growing from the surface of the above particles. The generated conductor M13 is supplied to the third process block 30.

The third process block 30 generates a conductive resin M21 by receiving the aforementioned conductor M13 and resin M20 and kneading them. While the composition and the molecular weight of the resin M20 are not particularly limited, the resin M20 is preferably a thermoplastic resin, and more preferably the resin M20 contains at least one of polypropylene, polyethylene, polystyrene, polyimide, or polyethylene terephthalate. The conductive resin M21 generated here is supplied to the fourth process block 40.

The fourth process block 40 receives the aforementioned conductive resin M21, expands this conductive resin M21 into a sheet shape, and molds the conductive resin M21 into a sheet having a predetermined thickness by extension or rolling. According to the aforementioned process, a conductive sheet M31 is manufactured. Note that the expansion, extension, and rolling may be performed when the temperature of the resin M20 included in the conductive resin M21 is equal to or above its melting point. In the conductive sheet M31, a plurality of conductors M13 are connected to each other, thereby forming a three-dimensional conductive network structure.

The outline of the battery material manufacturing system 1 has been described above. As described above, the battery material manufacturing system 1 can provide a battery material having excellent conductivity by a simple manufacturing process without requiring a catalyst carrier.

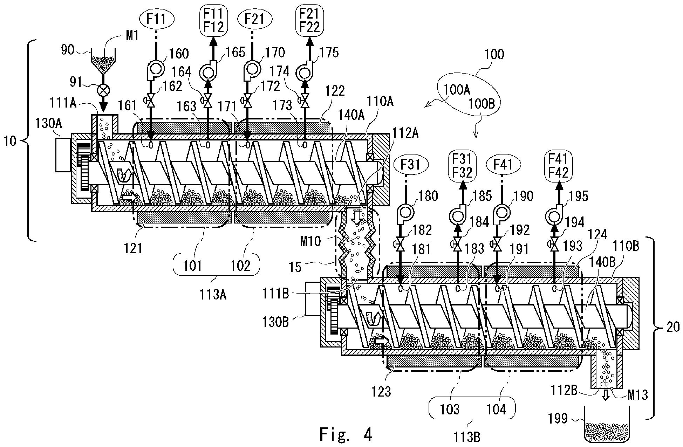

Next, with reference to Fig. 4, the first process block 10 and the second process block 20 will be described. Fig. 4 is an overview configuration diagram of a reaction system 100 in the first process block 10 and the second process block 20. The reaction system 100 includes a reaction system 100A that performs processing in the first process block 10 and a reaction system 100B that performs processing in the second process block 20. In the following descriptions, when components are illustrated, alphabetical symbols such as "A", "B", and "C" may be attached after the numerals indicating the components. In this case, it is assumed that components to which common numerals are attached as symbols but different alphabets are attached have the same functions. For example, the reaction system 100A and the reaction system 100B have a similar configuration, as described below. However, in this case, components to which different alphabets are attached may not be the same as each other.

First, the reaction system 100A will be described. The reaction system 100A performs the first processing and the second processing in the aforementioned first process block 10. The reaction system 100A shown in Fig. 4 is partially cut for clarity. The reaction system 100A generates the unsupported catalyst M10 by continuously continuing reaction. The reaction system 100A includes, as main components, a reaction furnace 110A, a first temperature control unit 121A, a second temperature control unit 122A, a drive unit 130A, a screw 140A, a hopper 90, and so on.

The reaction furnace 110A, which is a cylindrical furnace, includes a supply port 111A that receives a metal precursor M1, which is a raw material to be supplied, on one end side, and a sending-out port 112A that sends out the unsupported catalyst M10, which is a reaction product, on the other end side. Further, the reaction furnace 110A includes an intermediate part 113A between the supply port 111A and the sending-out port 112A. Further, the hopper 90 stores the metal precursor M1 and supplies the metal precursor M1 to the supply port 111A via a feeder 91.

The reaction furnace 110A includes a first processing unit 101 that performs the first processing on the upstream side of the intermediate part 113A. The first processing unit 101 includes one or more first fluid supply ports 161 for supplying a first fluid F11 used for the first processing. The first processing unit 101 further includes one or more first fluid discharge ports 163 for discharging a decomposition gas F12 and the first fluid F11 generated in the first processing. The first fluid supply port 161 receives the first fluid F11 whose flow rate and pressure have been adjusted to predetermined levels via a first fluid supply valve 162. The first fluid discharge port 163 discharges one or more kinds of fluids such as the decomposition gas F12 and the first fluid F11 whose flow rate and pressure have been adjusted to predetermined levels via a first fluid discharge valve 164.

Note that the reaction system 100A may further include a pumping apparatus 160 for assisting the flow rate and the pressure of the first fluid F11 that the first fluid supply port 161 receives. The pumping apparatus 160 is, for example, a pump. Further, the reaction system 100A may further include a suction apparatus 165 for assisting the flow rate and the pressure of the fluid discharged by the first fluid discharge port 163. The suction apparatus 165 is, for example, a pump or an ejector. The flow rate and the pressure of the fluid supplied from the first fluid supply port 161 to the first processing unit 101 and the flow rate and the pressure of the fluid discharged from the first processing unit 101 to the first fluid discharge port are not particularly limited. Note that the pressure of the fluid discharged to the first fluid discharge port 163 is preferably the same as or higher than the pressure of the fluid supplied from the first fluid supply port 161.

The reaction furnace 110A includes a second processing unit 102 that performs the second processing on a downstream side of the intermediate part. The second processing unit 102 includes one or more second fluid supply ports 171 for supplying the second fluid F21 used for the second processing. The second processing unit 102 further includes one or more second fluid discharge ports 173 for discharging a decomposition gas F22 and the second fluid F21 generated in the second processing. The second fluid supply port 171 receives the second fluid F21 whose flow rate and pressure have been adjusted to predetermined levels via a second fluid supply valve 172. The second fluid discharge port 173 discharges one or more kinds of fluids such as the decomposition gas F22 and the second fluid F21 whose flow rate and pressure have been adjusted to predetermined levels via a second fluid discharge valve 174.

Note that the reaction system 100A may further include a pumping apparatus 170 for assisting the flow rate and the pressure of the second fluid F21 received by the second fluid supply port 171. The pumping apparatus 170 is, for example, a pump. The reaction system 100A may further include a suction apparatus 175 for assisting the flow rate and the pressure of the fluid discharged by the second fluid discharge port 173. The suction apparatus 175 is, for example, a pump or an ejector. The flow rate and the pressure of the fluid supplied from the second fluid supply port 171 to the second processing unit 102 and the flow rate and the pressure of the fluid discharged from the second processing unit 102 to the second fluid discharge port 173 are not particularly limited. Note that it is preferable that the pressure of the fluid discharged to the second fluid discharge port 173 be the same as or higher than the pressure of the fluid supplied from the second fluid supply port 171.

The reaction furnace 110A further includes a first temperature control unit 121 for controlling the temperature of the first processing unit 101. The first temperature control unit 121, which includes a temperature control apparatus, that is, a heating apparatus or a cooling apparatus, controls the temperature of the reaction furnace 110A at a predetermined position in the first processing unit 101. Further, the reaction furnace 110A includes a second temperature control unit 122 for controlling the temperature of the second processing unit 102. The second temperature control unit 122, which includes a temperature control apparatus, that is, a heating apparatus or a cooling apparatus, controls the temperature of the reaction furnace 110A at a predetermined position in the second processing unit 102.

The first temperature control unit 121 and the second temperature control unit 122 each include a temperature control apparatus so as to surround the cylindrical reaction furnace 110A in the intermediate part 113A. The temperature control apparatus includes any heater capable of controlling temperature, such as, for example, a sheath heater, a coil heater, or a ceramic heater. The cooling apparatus may be, for example, a chiller unit for circulating a cooled fluid, or may be a cooling fin or a cooling fan for promoting heat dissipation. The first temperature control unit 121 and the second temperature control unit 122 perform, for example, heating in a range from a normal temperature to about 1000°C. Further, the first temperature control unit 121 and the second temperature control unit 122 may each include a control apparatus for controlling a heating apparatus or a cooling apparatus. The first temperature control unit 121 and the second temperature control unit 122 may each include a thermometer for monitoring the temperature at a predetermined position in the reaction furnace 110A. The reaction furnace 110A may also control the temperature, for example, by monitoring a current value if the heating apparatus has a principle of heating by passing a current. The heating apparatus may instead be a heat medium heater for circulating the heated fluid.

Further, inside the reaction furnace 110A, the screw 140A is provided to be rotatable along an extension direction of the cylinder. Accordingly, the reaction furnace 110A causes the metal precursor M1 received from the supply port 111A and the first fluid F11 received from the first fluid supply port 161 to react in the first processing unit 101 while conveying them on the downstream side. Further, the reaction furnace 110A causes the processing target that has passed through the first processing unit 101 and the second fluid F21 to react in the second processing unit 102 while conveying them toward the sending-out port 112A.

The drive unit 130A includes a motor for driving the screw 140A. The drive unit 130A may be the one in which the rotation speed of the screw 140A is set to be variable. The screw 140A is pivotally supported at each of both ends of the reaction furnace 110A, and connects to the drive unit 130A on the side of the supply port 111A. The screw 140A may be formed of, for example, an alloy made mainly of nickel or chromium or a ceramic containing alumina.

The reaction furnace 110A is formed of a material capable of withstanding a temperature change that occurs during production of a reaction product within the furnace and contact with substances supplied to the furnace. The reaction furnace 110A may be formed of, for example, an alloy made mainly of nickel or chromium or a ceramic containing alumina.

Next, the reaction system 100B will be described. The reaction system 100B performs the third processing and the fourth processing in the aforementioned second process block 20. That is, the reaction system 100B supplies an unsupported catalyst and lower hydrocarbon to a reaction system, performs thermal decomposition of lower hydrocarbon, and causes the lower hydrocarbon to contact the unsupported catalyst. Accordingly, the reaction system 100B generates a conductor M13. The reaction system 100B is shown to be partially cut for clarity. The reaction system 100B generates the conductor M13 by continuously continuing the response. The reaction system 100B includes, as main components, a reaction furnace 110B, a third temperature control unit 123, a fourth temperature control unit 124, a drive unit 130B, and a screw 140B.

The reaction furnace 110B, which is a cylindrical furnace, includes a supply port 111B that receives the unsupported catalyst M10 that is supplied to one end side from the reaction system 100A, and a sending-out port 112B that sends out the conductor M13, which is the reaction product, on the other end side. Further, the reaction furnace 110B includes an intermediate part 113B between the supply port 111B and the sending-out port 112B.

The reaction furnace 110B includes a third processing unit 103 that performs the third processing on the upstream side of the intermediate part 113B. The third processing unit 103 includes one or more third fluid supply ports 181 for supplying a third fluid F31 to be used for the third processing. Further, the third processing unit 103 includes one or more third fluid discharge ports 183 for discharging decomposition gas F32 and the third fluid F31 generated in the third processing. The third fluid supply port 181 receives the third fluid F31 whose flow rate and pressure have been adjusted to predetermined levels via a third fluid supply valve 182. The third fluid discharge port 183 discharges one or more kinds of fluids such as the decomposition gas F32 and the third fluid F31 whose flow rate and pressure have been adjusted to predetermined levels via a third fluid discharge valve 184.

Note that the reaction system 100B may further include a pumping apparatus 180 for assisting the flow rate and the pressure of the third fluid F31 that the third fluid supply port 181 receives. The pumping apparatus 180 is, for example, a pump. The reaction system 100B may further include a suction apparatus 185 for assisting the flow rate and the pressure of the fluid discharged by the third fluid discharge port 183. The suction apparatus 185 is, for example, a pump or an ejector. The flow rate and the pressure of the fluid supplied from the third fluid supply port 181 to the third processing unit 103 and the flow rate and the pressure of the fluid discharged from the third processing unit 103 to the third fluid discharge port 183 are not particularly limited. Note that the pressure of the fluid discharged to the third fluid discharge port 183 is preferably the same as or higher than the pressure of the fluid supplied from the third fluid supply port.

The reaction furnace 110B includes a fourth processing unit 104 that performs the fourth processing on a downstream side of the intermediate part 113B. The fourth processing unit 104 includes one or more fourth fluid supply ports 191 for supplying a fourth fluid F41 to be used for the fourth processing. The fourth processing unit 104 further includes one or more fourth fluid discharge ports 193 for discharging a decomposition gas F42 and the fourth fluid F41 generated in the fourth processing. The fourth fluid supply port 191 receives the fourth fluid F41 whose flow rate and pressure have been adjusted to predetermined levels via a fourth fluid supply valve 192. The fourth fluid discharge port 193 discharges one or more kinds of fluids such as the decomposition gas F42 and the fourth fluid F41 whose flow rate and pressure have been adjusted to predetermined levels via a fourth fluid discharge valve 194.

Note that the reaction system 100B may further include a pumping apparatus 190 for assisting the flow rate and the pressure of the fourth fluid F41 received by the fourth fluid supply port 191. The pumping apparatus 190 is, for example, a pump. The reaction system 100B may further include a suction apparatus 195 for assisting the flow rate and the pressure of the fluid discharged by the fourth fluid discharge port 193. The suction apparatus 195 is, for example, a pump or an ejector. The flow rate and the pressure of the fluid supplied from the fourth fluid supply port 191 to the fourth processing unit 104 and the flow rate and the pressure of the fluid discharged from the fourth processing unit 104 to the fourth fluid discharge port 193 are not particularly limited. Note that the pressure of the fluid discharged to the fourth fluid discharge port 193 is preferably the same as or higher than the pressure of the fluid supplied from the fourth fluid supply port 191.

The reaction furnace 110B includes a third temperature control unit 123 for controlling the temperature of the third processing unit 103. The third temperature control unit 123 includes a temperature control apparatus, that is, a heating apparatus or a cooling apparatus, and controls the temperature of the reaction furnace 110B at a predetermined position of the third processing unit 103. The reaction furnace 110B further includes a fourth temperature control unit 124 for controlling the temperature of the fourth processing unit 104. The fourth temperature control unit 124 includes a temperature control apparatus, that is, a heating apparatus or a cooling apparatus, and controls the temperature of the reaction furnace 110B at a predetermined position of the fourth processing unit 104.

The third temperature control unit 123 and the fourth temperature control unit 124 each include a heating apparatus to surround the cylindrical reaction furnace 110B in the intermediate part 113B. The heating apparatus includes any heater capable of performing temperature control, such as, for example, a sheath heater, a coil heater, or a ceramic heater. The heating apparatus performs heating in a range of, for example, a normal temperature to about 1000 degrees Celsius. Further, the third temperature control unit 123 and the fourth temperature control unit 124 may each include a control apparatus for controlling a heating apparatus or a cooling apparatus. The third temperature control unit 123 and the fourth temperature control unit 124 may each include a thermometer for monitoring the temperature at a predetermined position in the reaction furnace 110B. Further, the reaction furnace 110B may also perform temperature control by monitoring a current value if, for example, the heating apparatus has a principle of heating by passing a current. Note that the heating apparatus may be a heat medium heater that circulates a heated fluid.

Further, inside the reaction furnace 110B, a screw 140B is provided to be rotatable along an extension direction of the cylinder. As the screw 140B rotates, the unsupported catalyst M10 supplied to the reaction furnace 110B is conveyed toward the sending-out port 112B. That is, the reaction furnace 110B causes the unsupported catalyst M10 received from the supply port 111B and the third fluid F31 and the fourth fluid F41 received from the third fluid supply port 181 to react in a stepwise manner while conveying them toward the sending-out port 112B (the downstream side).

The drive unit 130B includes a motor for causing the screw 140B to drive. The drive unit 130B may be the one in which the rotation speed of the screw 140B is set to be variable. The screw 140B is pivotally supported at each of both ends of the reaction furnace 110B, and connects to the drive unit 130B on the side of the supply port 111B. The screw 140B may be formed of, for example, an alloy made mainly of nickel or chromium or a ceramic containing alumina.

The sending-out port 112B sends out the conductor M13 generated in the reaction furnace 110B to the outside of the reaction furnace 110B. After the conductor M13 is sent out from the sending-out port 112B, the container 199 recovers this conductor M13.

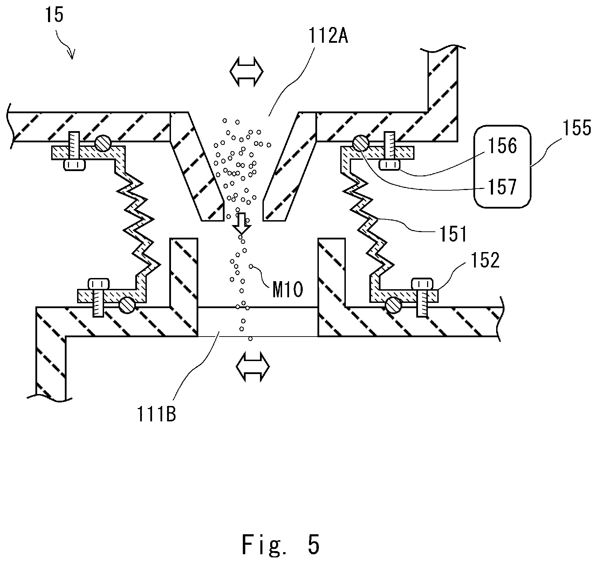

Next, with reference to Fig. 5, a connection block will be described. Fig. 5 is a cross-sectional view of a connection block 15. The reaction system 100 includes a connection block 15 which is provided between the reaction furnace 110A and the reaction furnace 110B. The connection block 15 isolates the space from the sending-out port 112A included in the reaction system 100A that performs the first process on the upstream side to the supply port 111B included in the reaction system 100B that performs the second process on the downstream side from the outside air. The connection block 15 includes, as main components, a ring-shaped connection part 152 that faces each of the first process block 10 and the second process block 20, and a cylindrical cover unit 151 installed from the connection part 152.

The cover unit 151 is a cylindrical member constructed to cover the sending-out port 112A and the supply port 111B. The cover unit 151 has such a flexibility that it can follow a change in a relative position between the sending-out port 112A of the reaction furnace 110A and the supply port 111B of the reaction furnace 110B. Further, the cover unit 151 may be formed of, for example, a silicon resin, a nitrile-based material, or a resin material including fluorine. Alternatively, the cover unit 151 may be formed of an alloy containing 10% to 30% chromium by wt% and containing no molybdenum. Further, in this case, the cover unit 151 may be the one including a part that is formed in a bellows shape along the extension direction. Accordingly, the cover unit can favorably follow the change in the relative position between the sending-out port 112A of the reaction furnace 110A and the supply port 111B of the reaction furnace 110B.

The connection part 152, which is a ring-shaped member formed at an end of the cover unit 151, is preferably formed integrally with the cover unit 151. The reaction furnace 110A and the connection block 15 are connected to each other by a connection member 155 in the connection part 152. The connection member 155 includes a seal material 157 and a bolt 156. The seal material 157, which is a ring-shaped member disposed along the connection part, has a characteristic that it is deformed when being bolted. The seal material 157 may be formed, for example, of rubber containing silicon, nitrile, or fluorine. Alternatively, the seal material 157 may be formed from a metal plate containing iron or nickel. Note that the aforementioned configuration may be employed also between the connection block 15 and the reaction furnace 110B.

According to the aforementioned configuration, the reaction furnace 110A sends out the unsupported catalyst M10 from the sending-out port 112A. Then the reaction furnace 110B receives the unsupported catalyst M10 in the supply port 111B. Since the reaction furnace 110A and the reaction furnace 110B are heated to a high temperature, their positions tend to change especially along a horizontal direction (left-right direction in the drawings). At this time, the connection block 15 favorably follows the change in the relative position between the sending-out port 112A of the reaction furnace 110A and the supply port 111B of the reaction furnace 110B while isolating the part between the sending-out port 112A of the reaction furnace 110A and the supply port 111B of the reaction furnace 110B from the outside air. Note that the connection block 15 may include a heating apparatus or a thermal insulation member in order to maintain a predetermined temperature.

The configuration of the reaction system 100 in the first process block 10 and the second process block 20 has been described above. According to the aforementioned configuration, the reaction system 100 continuously supplies the metal precursor M1 to the reaction furnace 110A. Accordingly, the reaction system 100 conveys the metal precursor M1 received in the reaction furnace 110A while causing it to react and continuously sends out the unsupported catalyst M10. Further, the reaction system 100 continuously supplies the unsupported catalyst M10 to the reaction furnace 110B via the connection block 15. Accordingly, the reaction system 100 conveys the unsupported catalyst M10 received by the reaction furnace 110B while causing it to react and continuously sends out the conductor M13.

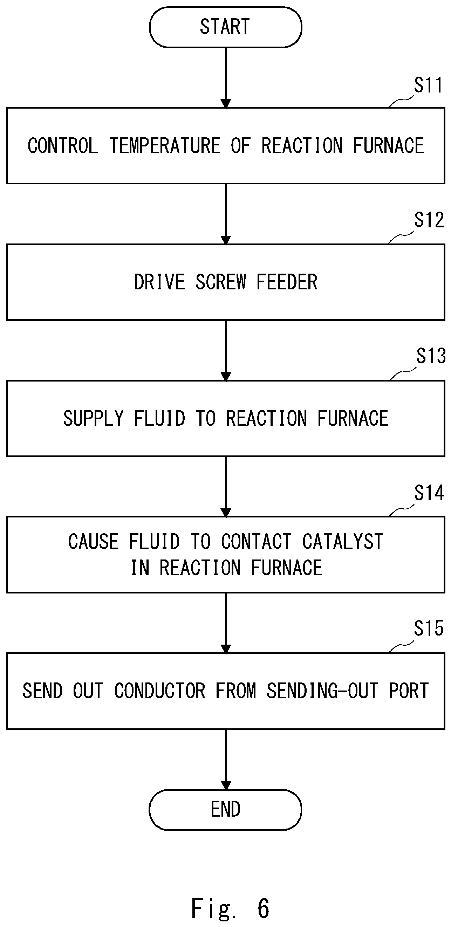

Next, with reference to Fig. 6, processing performed by the reaction system 100 in the first process block 10 and the second process block 20 will be described. Fig. 6 is a flowchart showing a battery material manufacturing method performed by the first process block 10 and the second process block 20.

An operator who operates the first process block 10 and the second process block 20 first controls the temperature of the reaction furnace 110A and the temperature of the reaction furnace 110B (Step S11), and further activates the drive unit 130A and the drive unit 130B to drive the screw 140A and the screw 140B (Step S12).

Next, the operator supplies each of the first fluid F11, the second fluid F21, and the metal precursor M1 to the reaction furnace 110A, and supplies each of the third fluid F31 and the fourth fluid F41 to the reaction furnace 110B (Step S13). Accordingly, the operator causes the first fluid F11 and the second fluid F21 to contact the metal precursor M1, which is a catalyst, in the reaction furnace 110A, and causes the third fluid F31 and the fourth fluid F41 to contact the unsupported catalyst M10 in the reaction furnace 110B (Step S14). In other words, the reaction system 100 receives each of the metal precursor M1, the first fluid F11, the second fluid F21, the third fluid F31, and the fourth fluid F41, and conveys them downstream while causing them to contact with each other under a set temperature environment. Meanwhile, in the reaction system 100, the metal precursor M1 changes to the unsupported catalyst M10. Further, the fibrous nanocarbon M15 grows on the surface of the unsupported catalyst M10, which then changes to the conductor M13.

Next, the operator causes the conductor M13 to be sent out from the sending-out port 112 (Step S15). The conductor M13 that has been sent out is recovered, and a series of processing is ended.

As described above, the battery material manufacturing method in the first process block 10 and the second process block 20 includes processing for supplying the metal precursor M1, and the first fluid F11, the second fluid F21, the third fluid F31, and the fourth fluid F41 to the reaction system 100. The battery material manufacturing method further includes processing for generating the unsupported catalyst M10 by causing the first fluid F11 and second fluid F21 to contact the metal precursor M1 in the reaction furnace 110A. The battery material manufacturing method further includes processing for generating the conductor M13 by causing the third fluid F31 and the fourth fluid F41 to contact the unsupported catalyst M10 in the reaction furnace 110B. Accordingly, the battery material manufacturing method can efficiently generate a conductor not containing a catalyst carrier.

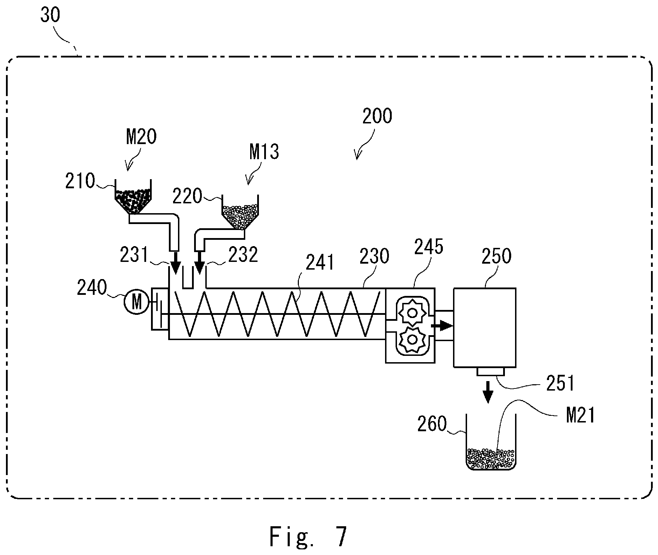

Next, with reference to Fig. 7, the third process block 30 will be described. Fig. 7 is an overview configuration diagram of a kneading system 200 in the third process block 30. The third process block 30 includes a kneading system 200 that performs the third process. The kneading system 200 receives each of the resin M20 and the conductor M13 manufactured by the reaction system 100, and manufactures a conductive resin M21.

The kneading system 200 includes, as main components, a resin storage part 210, a conductor storage part 220, a kneader 230, a drive apparatus 240, a gear pump 245, a granulator 250, and a container 260.

The resin storage part 210 is a container that stores the resin M20 forming the conductive resin M21 in such a way that the resin M20 can be supplied to the kneader 230. The resin storage part 210 may be a container called a hopper. The resin storage part 210 continuously supplies the resin M20 to the kneader 230 via a resin supply port 231.

The conductor storage part 220 is a container that stores the conductor M13 manufactured by the reaction system 100 in such a way that the conductor M13 can be supplied to the kneader 230. The conductor storage part 220 may be a container called a hopper. The conductor storage part 220 continuously supplies the conductor M13 to the kneader 230 via a conductor supply port 232 in such a way that the rate of the conductor M13 becomes 5 to 90 wt%.

The drive apparatus 240 is a drive apparatus including a motor that rotates a kneading screw 241 provided in the kneader 230. The kneading screw 241 conveys the resin M20 supplied from the resin supply port 231 and the conductor M13 supplied from the conductor supply port 232 while kneading them in the kneader 230, and supplies the kneaded material to the gear pump 245. Specifically, the kneading screw 241 is preferably a twin screw. The resin M20 and the conductor M13 are favorably mixed by the kneading screw 241. At this time, the kneading screw 241 uniformly mixes the resin M20 and the conductor M13 while preventing the composition of the fibrous nanocarbon included in the conductor M13 from being damaged by kneading.

The gear pump 245 receives the kneaded material of the resin M20 and the conductor M13, and controls the rotation of the gear in such a way that the pressure when the received kneaded material is sent out is in a predetermined range. The gear pump 245 sends out the received kneaded material to the granulator 250 which is on the downstream side.

The granulator 250 receives the kneaded material generated by the kneader 230 via the gear pump 245, and generates granules having a predetermined size from the received kneaded material. The granulator 250 manufactures the conductive resin M21 by granulating the received kneaded material into a granular form. The granulator 250 sends out the manufactured conductive resin M21 from a kneaded material sending-out port 251 and causes the container 260 to recover the manufactured conductive resin M21. The container 260 is a container that accommodates the conductive resin M21 ejected from the kneaded material sending-out port 251. According to the aforementioned configuration, the kneaded material sending-out port 251 sends out the conductive resin M21, which is a kneaded material with a volume resistivity of less than 1.0 × 10⁶ Ω·m. Alternatively, the kneaded material sending-out port 251 sends out the conductive resin M21, which is a kneaded material with a volume resistivity of less than 1.0 × 10³ Ω·m. Further, the kneaded material sending-out port 251 sends out the conductive resin M21 including 5 volume % or more of carbon nanotubes having a length of 0.5 µm or more.

The configuration of the kneading system 200 has been described above. The kneading system 200 includes, besides the aforementioned configuration, a temperature control apparatus that is not shown. The temperature control apparatus heats the resin M20 and the conductor M13 received inside the kneader 230 in such a way that the resin M20 and the conductor M13 can be kneaded. The temperature control apparatus may include a function for pre-heating the resin storage part 210.

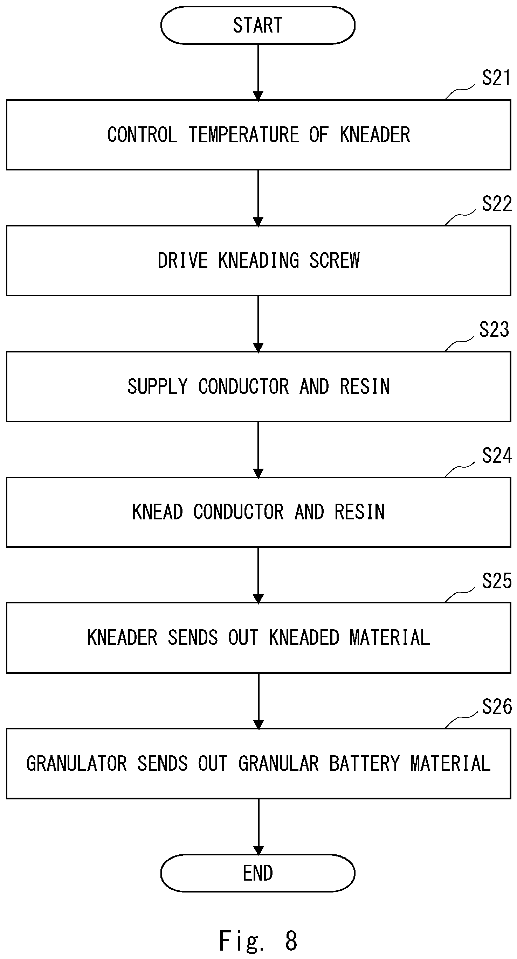

Next, with reference to Fig. 8, processing performed by the kneading system 200 in the third process block 30 will be described. Fig. 8 is a flowchart showing processing in the third process block 30.

An operator who operates the third process block 30 first controls the temperature of the kneader 230 (Step S21), and further activates the drive apparatus 240 to drive the kneading screw 241 (Step S22).

Next, the operator supplies each of the conductor M13 and the resin M20 to the kneader 230 (Step S23). Accordingly, the operator causes the kneader 230 to knead the conductor M13 and the resin M20 (Step S24). In other words, the kneader 230 receives each of the conductor M13 and the resin M20, and conveys them downward while kneading them in a set temperature environment.

Next, the operator causes the kneaded material to be supplied to the granulator 250 from the kneader 230 via the gear pump 245 (Step S25). The granulator 250 manufactures the conductive resin M21 by processing the kneaded material received from the kneader 230 into a granular form, and sends outs this conductive resin M21 (Step S26). The conductive resin M21 that has been sent out is recovered in the container 260.

The third process block 30 has been described above. The battery material manufacturing method in the third process block 30 includes processing for supplying each of the conductor M13 in which the fibrous nanocarbon M15 is caused to grow on the unsupported catalyst M10, and the resin M20 to be kneaded with the conductor M13, to the kneader 230. The battery material manufacturing method includes processing for kneading the conductor M13 and the resin M20 by the kneading screw 241 of the kneader 230 to generate a kneaded material and sending out the generated kneaded material as a battery material. Accordingly, with the battery material manufacturing method, it is possible to manufacture a battery material having preferable conductivity by using a conductor that does not contain a carrier.

Note that the aforementioned kneading system 200 preferably includes a twin screw as the kneading screw 241. That is, in the aforementioned battery material manufacturing method, the kneader 230 preferably includes processing for performing kneading by a twin screw as the kneading screw 241. Accordingly, the battery material manufacturing system 1 can produce a battery material having a conductive path in a three dimensional way by defibrating fibrous nanocarbon having a fiber length of 0.5 to 30 µm and enhancing dispersibility. That is, the battery material manufacturing system 1 can manufacture the battery material having preferable conductivity continuously and efficiently.

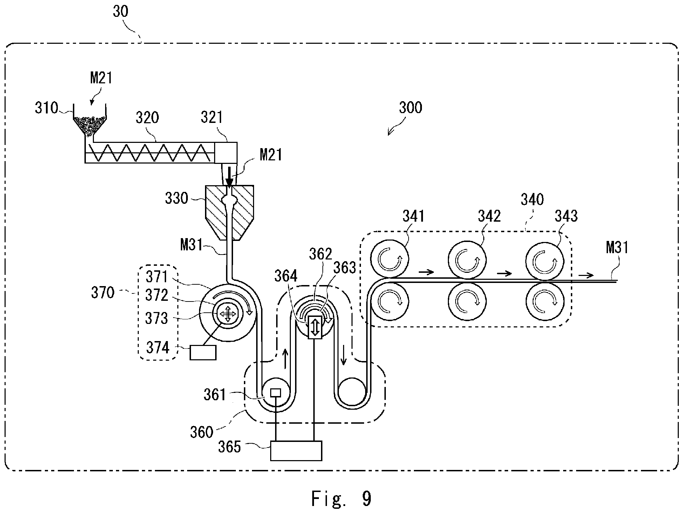

Next, with reference to Fig. 9, the fourth process block 40 will be described. Fig. 9 is an overview configuration diagram of a molding system 300 in the fourth process block 40. The fourth process block 40 includes the molding system 300 that performs the fourth process block 40. The molding system 300 molds the conductive resin M21 manufactured by the kneading system 200 into a sheet shape. The molding system 300 includes, as main components, a pellet storage part 310, an extruder 320, a T-die 330, a cast block 370, an extending block 360, and a rolling block 340.

The pellet storage part 310 stores the conductive resin M21 manufactured by the kneading system 200 in such a way that the conductive resin M21 can be supplied to the extruder 320. The pellet storage part 310 may also be called a kneaded material supply port for receiving the kneaded material manufactured by the kneading system 200. The extruder 320 softens the conductive resin M21 supplied from the pellet storage part 310 so that the conductive resin M21 can be molded by heating, extrudes the conductive resin M21 by a screw, and supplies the extruded resin to a pump unit 321. The pump unit 321 includes, for example, a gear pump, and supplies the softened conductive resin M21 to the T-die 330. The extruder 320 is preferably a twin-screw extruder.

The T-die 330 is one embodiment of a sheet molding machine. The T-die 330 receives the conductive resin M21 supplied from the pump unit 321 and continuously sends out a sheet-like conductive sheet M31. At this time, the thickness of the sheet sent out from the T-die 330 is, for example, about 0.3 mm to 3 mm.

The T-die 330 includes, as main components, an expanding part and a sending-out part. The expanding part guides the received kneaded material in the sending-out direction while expanding the received kneaded material in a direction perpendicular to the sending-out direction. The sending-out part is a slit-like opening through which the kneaded material that has been guided in the sending-out direction from the expanding part can be continuously sent out. With the aforementioned configuration, the T-die 330, which is a sheet molding machine, can generate a sheet-like battery material. That is, the T-die 330 manufactures a sheet-like battery material with a volume resistivity in the thickness direction of less than 1.0 × 10⁶ Ω·m. Alternatively, the T-die 330 manufactures a sheet-like battery material with a volume resistivity in the thickness direction of less than 1.0 × 10³ Ω·m.

The cast block 370 includes, as main components, a cast roller 371, a rotational drive unit 372, a displacement drive unit 373, and a drive control unit 374.

The cast roller 371 is a roller rotated by the rotational drive unit 372. The cast roller 371 receives the sheet-like battery material which is sent out from the T-die 330 and is in a high-temperature and flowable state on the surface of the roller while rotating, extends while cooling it, and sends out the received sheet-like battery material to the next step. At this time, the circumferential speed on the surface of the cast roller 371 is set to be higher than the sending-out speed of the battery material sent out from the T-die 330. Accordingly, the cast roller 371 can extend the battery material while cooling it.

The rotational drive unit 372 causes the cast roller 371 to rotate in accordance with an instruction of the drive control unit 374. The rotational drive unit 372 includes a motor to cause the cast roller 371 to rotate, a sensor to measure the rotation speed of the cast roller 371, and so on.

The displacement drive unit 373 displaces the cast roller in the Z-axis direction (i.e., vertical direction) in the drawing and the X-axis direction (i.e., horizontal direction, or the thickness direction of the battery material sent out in a sheet shape) in the drawing. More specifically, the displacement drive unit 373 includes, for example, a linear rail that can move along each of the Z-axis direction and the X-axis direction, a bearing that engages the linear rail to support the cast roller, and a motor that drives this bearing along the linear rail. The displacement drive unit 373 displaces the cast roller 371 upon receiving a control signal from the drive control unit 374.

The drive control unit 374 includes a drive circuit that drives each of the rotational drive unit 372 and the displacement drive unit 373, and an arithmetic circuit that drives each of the rotational drive unit 372 and the displacement drive unit 373 in accordance with data regarding the rotation speed of the cast roller 371 and the position of the cast roller 371 received from the rotational drive unit 372 and the displacement drive unit 373.

According to the aforementioned configuration, the cast block 370 extends the battery material which is sent out from the T-die 330 and is in a high-temperature and flowable state while cooling the battery material. Note that the cast block 370 may include a temperature control unit for adjusting the temperature of the battery material.

The extending block 360 includes, as main components, a tension sensor 361, an extension roller 362, a rotational drive unit 363, a displacement drive unit 364, and a drive control unit 365.

The tension sensor 361 measures the tension that the sheet-like battery material receives. More specifically, the tension sensor, which is interposed between the T-die 330 and the extension roller 362, measures, as the tension, the force in the pulling direction exerted on the battery material. The tension sensor 361 supplies data regarding the measured tension to the drive control unit 365.

The extension roller 362 is a roller that pulls and reels out the sheet-like battery material sent out from the cast block 370. The rotation of the extension roller 362 is driven by the rotational drive unit 363. Further, the position of the extension roller 362 is set by the displacement drive unit 364.

The rotational drive unit 363 drives the extension roller 362 so that the battery material is sent out in a sending-out direction at a speed faster than the sending-out speed in the cast block 370. The rotational drive unit 363 includes a motor, a speed reducer, and the like that are rotationally driven upon reception of a control signal from the drive control unit 365.

The displacement drive unit 364 displaces the extension roller 362. More specifically, the displacement drive unit 364 includes, for example, a linear rail, a bearing that engages the linear rail to support the extension roller 362, and a motor that drives the bearing along the linear rail. The displacement drive unit 364 displaces the extension roller 362 upon receiving a control signal from the drive control unit 365.

The drive control unit 365 includes a drive circuit that drives each of the rotational drive unit 363 and the displacement drive unit 364, and an arithmetic circuit that drives each of the rotational drive unit 363 and the displacement drive unit 364 in accordance with data regarding the tension received from the tension sensor 361. The drive control unit 365 adjusts the rotation speed of the extension roller 362 in accordance with the tension. Further, the drive control unit 365 causes the displacement drive unit 364 to displace the extension roller 362 in accordance with the tension. Accordingly, the extending block 360 extends the battery material while suppressing the tension excessively exerted on the battery material.

According to the aforementioned configuration, the extending block sends out the battery material sent out from the cast block 370 to the next rolling block 340 while extending this battery material.

The rolling block 340 further rolls the sheet-like conductive sheet M31 sent out from the extending block to process the sheet-like conductive sheet M31 to be thinner. The rolling block 340 includes, as main components, a first rolling apparatus 341, a second rolling apparatus 342, and a third rolling apparatus 343. The first rolling apparatus 341 sandwiches the conductive sheet M31 from the front and back thereof by rolling rollers, and sends out the conductive sheet M31 while compressing it.

The first rolling apparatus 341 supplies the rolled conductive sheet M31 to the second rolling apparatus 342. The second rolling apparatus 342 further rolls the conductive sheet M31 sent out from the first rolling apparatus 341, and supplies the rolled conductive sheet M31 to the third rolling apparatus 343. The third rolling apparatus 343 further rolls the conductive sheet M31 sent out from the second rolling apparatus 342, and sends out the rolled conductive sheet M31 to the next process. The rolling block 340 may further include, besides the above configuration, a heating apparatus. It is sufficient that the rolling block 340 include one or more rolling apparatuses. The rolling block 340 rolls the conductive sheet M31 received from the extending block in such a way that the thickness of the conductive sheet M31 becomes, for example, from about 0.05 mm to about 0.03 mm.

The molding system 300 has been described above. The molding system 300 may further include a process for cutting the conductive sheet M31 in a later process of the rolling block 340. Alternatively, the molding system 300 may further include means for winding the conductive sheet M31, which is a battery material, in a later process of the rolling block 340.

The rolling block 340 may also include a heating apparatus. Since the rolling block 340 rolls the conductive sheet M31 while controlling the temperature of the conductive sheet M31, the conductive sheet M31 can be rolled while maintaining the function of the conductive filler.

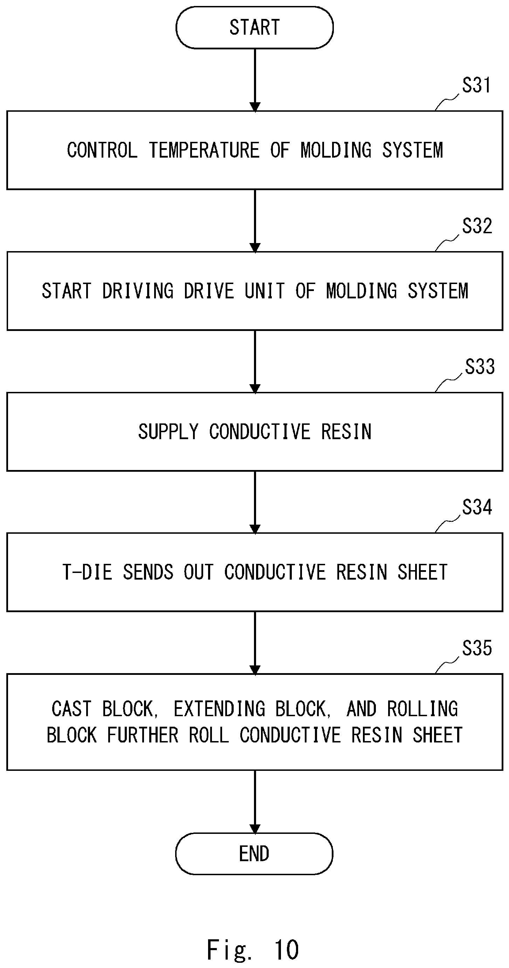

Next, with reference to Fig. 10, processing performed by the molding system 300 in the fourth process block 40 will be described. Fig. 10 is a flowchart showing processing performed in the fourth process block 40.

An operator who operates the fourth process block 40 first controls the temperature of the molding system 300 (Step S31), and further starts driving the drive unit of the molding system 300 (Step S32). The drive unit of the molding system 300 is, for example, the screw of the extruder 320, the pump of the pump unit 321, the cast roller 371 of the cast block 370, the extension roller 362 of the extending block 360, the rolling rollers of the rolling block 340, or the like.

Next, the operator supplies the conductive resin M21 to the extruder 320 (Step S33). Accordingly, the operator causes the T-die 330 to send out the conductive sheet M31 (Step S34). In other words, the extruder 320 receives the conductive resin M21, softens the received conductive resin M21 in a set temperature environment, and supplies the softened conductive resin M21 to the T-die 330. The T-die 330 forms the received conductive resin M21 in a sheet shape and sends out this conductive resin M21.

Next, the operator performs processing in any one of the cast block 370, the extending block 360, and the rolling block 340 on the conductive sheet M31 (Step S35). That is, the operator further reduces the thickness of the conductive sheet M31 sent out from the T-die 330.

The processing performed by the molding system 300 in the fourth process block 40 has been described above. As described above, in the battery material manufacturing method in the fourth process block 40, the molding system 300 feeds the conductive resin M21 sent out from the extruder 320 into the T-die 330, which is a sheet molding machine, to continuously mold a sheet-like battery material. Here, the sheet-like battery material has a thickness of 0.01 mm to 3 mm and a width of 100 mm or more. Further, the sheet-like battery material contains the conductor M13 generated by growing nanocarbon on an unsupported catalyst at a rate from 5 to 90 wt%. Accordingly, with the battery material manufacturing system and the battery material manufacturing method, it is possible to efficiently manufacture a battery material having preferable conductivity.

The first embodiment has been described above. The battery material manufacturing system 1 can continuously mold a battery material having high conductivity efficiently. Further, the battery material manufacturing system 1 can continuously mold a homogeneous battery material. Therefore, according to the first embodiment, it is possible to provide a battery material manufacturing apparatus and the like capable of continuously manufacturing the battery material efficiently.

### <Second Embodiment>

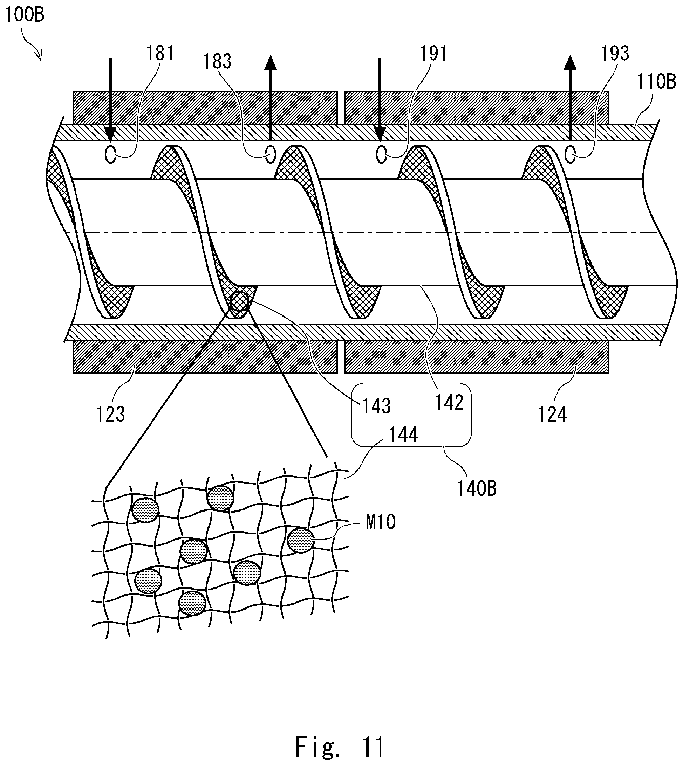

Next, a second embodiment will be described. Fig. 11 is a configuration diagram of a reaction system 100B according to the second embodiment. The reaction system 100B shown in Fig. 11 is an enlarged view of a part of the reaction system 100 shown in Fig. 4. In the reaction system 100B, a screw 140B includes the following configuration.

The screw 140B includes a shaft part 142 extending along am extension direction of a reaction furnace 110B, and a flight part 143 provided on an outer circumference of the shaft part 142. The flight part 143 is a member installed on the outer circumference of the shaft part of the screw 140B. The flight part 143 is a plate-like member formed spirally around the shaft part 142. With this configuration, the flight part 143 conveys the processing target in the reaction furnace 110B downstream as the shaft part 142 rotates. Note that the flight part 143 may be formed by one continuous member, or may be formed by a plurality of spiral members, like a two-thread screw. Further, the flight part 143 may be the one that is formed intermittently in a spiral pattern.

The flight part 143 according to this embodiment includes a capturing member 144 including a plurality of holes in at least a part of the flight part 143. The capturing member 144 has such a structure that it can temporarily capture the unsupported catalyst M10. The structure of the capturing member 144 is, for example, a mesh structure having a plurality of holes. In this case, mesh holes have such a size that the unsupported catalyst M10 is captured therein and can be released therefrom. More specifically, the size of the space of the mesh holes is preferably in a range from 20 to 1000 µm, and more preferably in a range from 100 to 300 µm.

The member forming the mesh is preferably subjected to a surface treatment, such as coating with oxides or nitrides. It is therefore possible to prevent the unsupported catalyst M10 from adhering to the mesh. The shape of the mesh may be rectangular, circular, or another shape. Note that the oxides include, for example, alumina or zirconia. Further, the nitrides include, for example, titanium nitride or boron nitride.

With the aforementioned structure, the unsupported catalyst M10 captured by the flight part 143 is in a state in which reaction gas contacts a part of the surface of the unsupported catalyst M10. Accordingly, a starting point for causing nanocarbon to grow tends to occur on a part of the unsupported catalyst M10 which the reaction gas contacts. Accordingly, the reaction system 100B prevents the starting point of the growth of nanocarbon generated on the surface of the unsupported catalyst M10 from dispersing. That is, the reaction system 100 can manufacture a preferable conductor M13 as a battery material.

Further, since the capturing member 144 of the flight part 143 has a mesh structure, ventilation in the reaction furnace 110B is improved. Therefore, for example, the fluid supplied from a third fluid supply port 181 passes through the mesh holes and flows easily to a third fluid discharge port 183. Accordingly, it becomes easier for the flight part 143 to release the captured unsupported catalyst M10. When nanocarbon grows on the surface of the unsupported catalyst M10, nanocarbon becomes likely to be entangled in the mesh of the capturing member 144. Therefore, it is preferable that the size of the mesh of the capturing member 144 increases toward the downstream side of the reaction furnace 110.

With the aforementioned structure, the reaction system 100B can suppress or reduce occurrence of a phenomenon (necking) in which a plurality of unsupported catalysts M10 partially sinter to each other in the reaction furnace 110B. That is, with the reaction system 100 according to this embodiment, it is possible to suppress or reduce the reduction in the reaction efficiency of the processing target.

### <Third Embodiment>

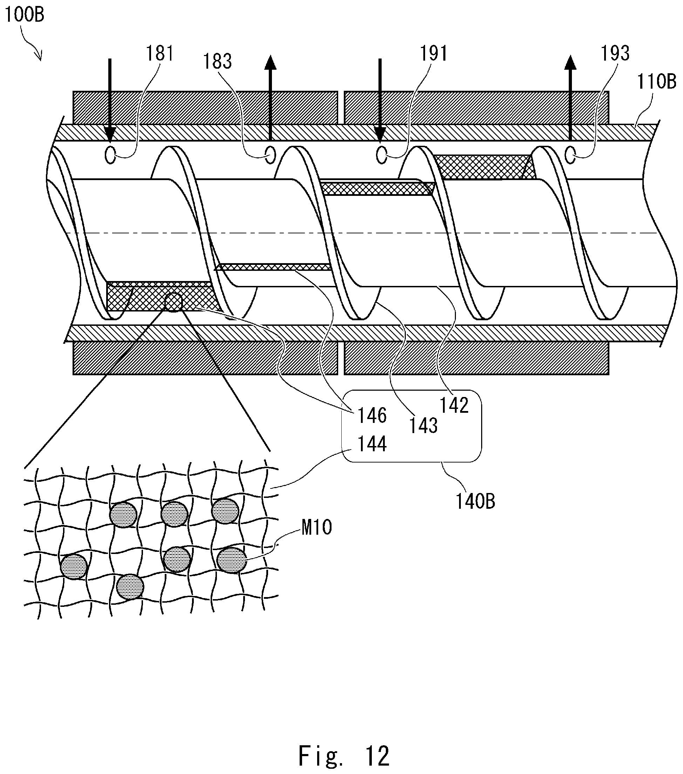

Next, a third embodiment will be described. Fig. 12 is a configuration diagram of a reaction system 100B according to the third embodiment. The reaction system 100B shown in Fig. 12 is an enlarged view of a part of the reaction system 100 shown in Fig. 4. In the reaction system 100B, a screw 140B includes the following configuration.

The screw 140B includes a shaft part 142, a flight part 143, and an interference plate 146. Among them, the interference plate 146 is a member that is formed to bridge between different positions of the flight part 143. The interference plate 146 shown in Fig. 12 is formed to bridge between different positions of the flight part 143 along an extension direction of the reaction furnace 110B. Further, the interference plate 146 is formed from an outer peripheral surface of the shaft part 142 toward the inner wall side of the reaction furnace 110B along the radial direction of the shaft part 142.

The interference plate 146 includes a capturing member 144 including a plurality of holes in at least a part of the interference plate 146. The capturing member 144 has a structure capable of temporarily capturing an unsupported catalyst M10. The structure of the capturing member 144 is, for example, a mesh structure having a plurality of holes. In this case, mesh holes have such a size that the unsupported catalyst M10 is captured therein. More specifically, the size of the space of the mesh holes is preferably in a range from 20 to 1000 µm, and further preferably in a range from 100 to 300 µm.

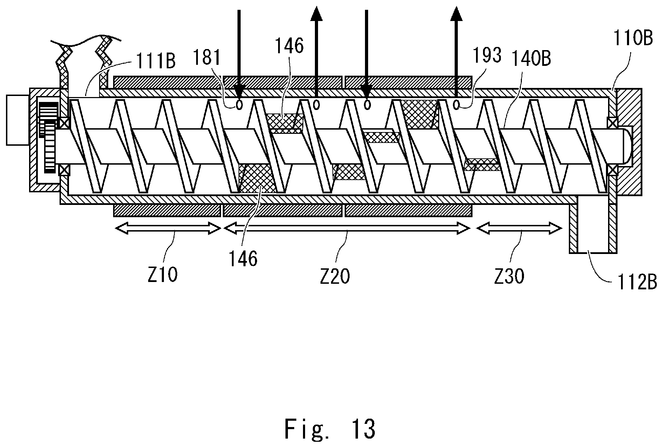

With reference to Fig. 13, the reaction system 100 according to this embodiment will be further described. Fig. 13 is a diagram showing a plurality of regions included in the reaction system 100B. A part of the configuration of the reaction system 100B shown in Fig. 13 is omitted in order to facilitate understanding. The reaction system 100B includes, from the upstream side, a pre-heating region Z10, a reaction region Z20, and a cooling region Z30 along the extension direction of the reaction furnace 110B.

The pre-heating region Z10 extends from a part near a supply port 111B to just before a third fluid supply port 181. In the pre-heating region Z10, the unsupported catalyst M10 received from the supply port 111B is conveyed downstream while gradually heating the unsupported catalyst M10.

The reaction region Z20 is a region from a part near the third fluid supply port 181 to a part near a fourth fluid discharge port 193. In the reaction region Z20, the screw 140B includes an interference plate 146. The reaction system 100B causes the unsupported catalyst M10 to contact fluid such as lower hydrocarbon in the reaction region Z20, thereby prompting the growth of nanocarbon.

Since the screw 140B includes the interference plate 146 in the reaction region Z20, the screw 140B prevents the unsupported catalyst M10 from settling at a bottom part of the reaction furnace 110B. That is, the interference plate 146 temporarily scrapes up the unsupported catalyst M10 in the reaction furnace 110B. Accordingly, the reaction system 100B improves the reaction efficiency of the unsupported catalyst M10.

Further, since the interference plate 146 includes the capturing member 144, the interference plate 146 favorably scrapes up the unsupported catalyst M10, and captures the unsupported catalyst M10. Further, since the capturing member 144 has a mesh structure, the reaction region Z20 suppresses reduction in the flowability of the fluid caused by the interference plate 146.

Further, the capturing member 144 of the interference plate 146 is in a state in which reaction gas contacts a part of the surface of the captured unsupported catalyst M10, as described above. Accordingly, a starting point for causing nanocarbon to grow tends to occur on a part of the unsupported catalyst M10 which the reaction gas contacts. Accordingly, the reaction system 100B prevents the starting point of the growth of nanocarbon generated on the surface of the unsupported catalyst M10 from dispersing. That is, the reaction system 100 can manufacture a preferable conductor M13 as a battery material.

The cooling region Z30, which is a zone on a downstream side of the reaction region, extends from a part near the fourth fluid discharge port 193 to a part near a sending-out port 112B. The cooling region Z30 conveys the conductor M13 generated in the reaction region downstream while cooling it, and sends out the conductor M13 to the sending-out port 112B.

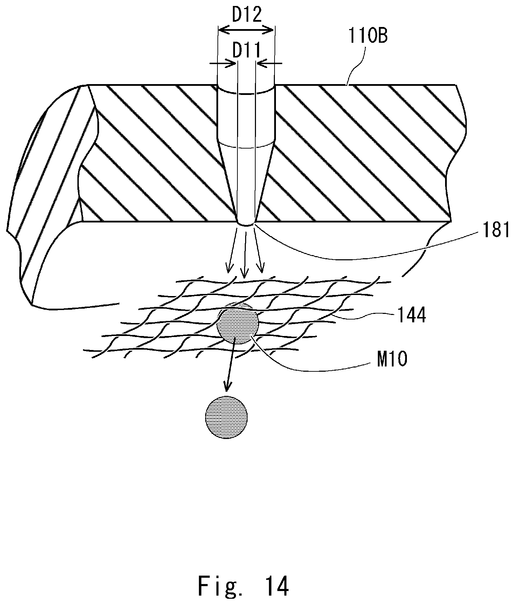

Next, with reference to Fig. 14, a relation between the capturing member 144 and a flow of the fluid will be described. Fig. 14 is a diagram for describing a flow of the fluid in the third fluid supply port 181. Fig. 14 is an enlarged view of a cross section of the third fluid supply port 181 in the reaction furnace 110B.

In the third fluid supply port 181 shown in Fig. 14, the inner wall side of the reaction furnace 110B has a diameter D11. Further, the diameter of the third fluid supply port 181 gradually increases from the inner wall toward the outer wall of the reaction furnace 110B, and the outer wall side has a diameter D12. Here, the diameter D11 is, for example, 70% to 30% of the diameter D12. In this manner, since the diameter of the ejection port on the inner wall side of the third fluid supply port 181 is smaller, the third fluid supply port 181 can increase the ejection rate of the fluid.

Fig. 14 shows the capturing member 144 below the third fluid supply port 181. This capturing member 144 may be a part of the flight part 143 or may be a part of the interference plate 146. The capturing member 144 receives the fluid ejected by the third fluid supply port 181. At this time, when the capturing member 144 has captured the unsupported catalyst M10, the unsupported catalyst M10 falls off from the capturing member 144 by the ejected fluid.

As described above, in the reaction system 100 according to this embodiment, the diameter of the fluid supply port is formed to be smaller toward the tip end in the ejection part of the fluid supply port, and the reaction system 100 includes a region where the capturing member 144 is provided near the ejection part. Accordingly, the reaction system 100 favorably releases the unsupported catalyst M10 captured by the capturing member 144.

While Fig. 14 shows the third fluid supply port 181 as an example, a similar configuration can also be applied to the fourth fluid supply port 191.

According to the above embodiments, it is possible to provide a battery material having excellent conductivity, a battery material manufacturing method, and a battery material manufacturing system.

Although the present invention is described above with reference to the embodiments, the present invention is not limited to the above-described embodiments. Various modifications that can be understood by those skilled in the art can be made to the configuration and details of the present invention within the scope and spirit of the invention.

This application is based upon and claims the benefit of priority from Japanese patent application No. 2023-133475, filed on August 18, 2023, the disclosure of which is incorporated herein in its entirety by reference.

### Industrial Applicability

The present disclosure can be applicable, for example, to a material of a secondary battery, and a system and the like for manufacturing the material of the secondary battery.

### Reference Signs List

- 1: BATTERY MATERIAL MANUFACTURING SYSTEM
- 10: FIRST PROCESS BLOCK
- 15: CONNECTION BLOCK
- 20: SECOND PROCESS BLOCK
- 30: THIRD PROCESS BLOCK
- 40: FOURTH PROCESS BLOCK
- 90: HOPPER
- 91: FEEDER
- 100: REACTION SYSTEM
- 101: FIRST PROCESSING UNIT
- 102: SECOND PROCESSING UNIT
- 103: THIRD PROCESSING UNIT
- 104: FOURTH PROCESSING UNIT
- 110: REACTION FURNACE
- 111: SUPPLY PORT
- 112: SENDING-OUT PORT
- 113: FLUID SUPPLY PORT
- 114: FLUID SENDING-OUT PORT
- 120: TEMPERATURE CONTROL UNIT
- 130: DRIVE UNIT
- 140: SCREW
- 142: SHAFT PART
- 143: FLIGHT PART
- 144: CAPTURING MEMBER
- 146: INTERFERENCE PLATE
- 151: COVER UNIT
- 152: CONNECTION PART
- 160: PUMPING APPARATUS
- 161: FIRST FLUID SUPPLY PORT
- 163: FIRST FLUID DISCHARGE PORT
- 170: PUMPING APPARATUS
- 171: SECOND FLUID SUPPLY PORT
- 173: SECOND FLUID DISCHARGE PORT
- 181: THIRD FLUID SUPPLY PORT
- 183: THIRD FLUID DISCHARGE PORT
- 191: FOURTH FLUID SUPPLY PORT
- 193: FOURTH FLUID DISCHARGE PORT
- 199: CONTAINER
- 200: KNEADING SYSTEM
- 210: RESIN STORAGE PART
- 220: CONDUCTOR STORAGE PART
- 230: KNEADER
- 231: RESIN SUPPLY PORT
- 232: CONDUCTOR SUPPLY PORT
- 240: DRIVE APPARATUS
- 241: KNEADING SCREW
- 250: GRANULATOR
- 251: KNEADED MATERIAL SENDING-OUT PORT
- 260: CONTAINER
- 300: MOLDING SYSTEM
- 310: PELLET STORAGE PART
- 320: EXTRUDER
- 321: PUMP UNIT
- 330: T-DIE
- 340: ROLLING BLOCK
- 341: FIRST ROLLING APPARATUS
- 342: SECOND ROLLING APPARATUS
- 343: THIRD ROLLING APPARATUS
- 360: EXTENDING BLOCK
- 361: TENSION SENSOR
- 362: EXTENSION ROLLER
- 363: ROTATIONAL DRIVE UNIT
- 364: DISPLACEMENT DRIVE UNIT
- 365: DRIVE CONTROL UNIT
- 370: CAST BLOCK
- 371: CAST ROLLER
- 372: ROTATIONAL DRIVE UNIT
- 373: DISPLACEMENT DRIVE UNIT
- 374: DRIVE CONTROL UNIT
- M1: METAL PRECURSOR
- M10: UNSUPPORTED CATALYST
- M11: LOWER HYDROCARBON
- M12: GAS
- M13: CONDUCTOR
- M15: FIBROUS NANOCARBON
- M20: RESIN
- M21: CONDUCTIVE RESIN
- M31: CONDUCTIVE RESIN SHEET

## Claims

1. A battery material comprising:
a resin; and
a conductor kneaded into the resin,
wherein the conductor contains particles of an unsupported catalyst and nanocarbon formed by growing from the particles.

2. The battery material according to claim 1, wherein the resin contains the conductor at a rate from 5 to 90 wt%.

3. The battery material according to claim 1, wherein the nanocarbon included in the conductor is a carbon nanotube that grows fibrously from the unsupported catalyst.

4. The battery material according to claim 3, wherein the conductor contains 5 volume % or more of carbon nanotubes having a length of 0.5 µm or more.

5. The battery material according to claim 1, wherein the unsupported catalyst is a transition metal from Group 3 to Group 12.

6. The battery material according to claim 5, wherein the unsupported catalyst includes nickel, iron, cobalt, or palladium.

7. The battery material according to claim 1, wherein the resin includes polypropylene, polyethylene, or polyethylene terephthalate.

8. The battery material according to claim 1, wherein the battery material has a volume resistivity of less than 1 × 10⁶ Ω·m.

9. The battery material according to any one of claims 1 to 8, wherein the battery material is molded in a continuously molded sheet shape having a thickness from 0.01 mm to 3 mm and a width of 100 mm or more.

10. A battery material manufacturing method comprising:
supplying each of a conductor in which nanocarbon is made to grow on an unsupported catalyst and a resin to be kneaded with the conductor to a kneader;
kneading the conductor and the resin by a kneading screw of the kneader to generate a kneaded material; and
sending out the kneaded material from the kneader as a battery material.

11. The battery material manufacturing method according to claim 10, comprising:
supplying the unsupported catalyst and lower hydrocarbon to a reaction system; and
generating the conductor by performing thermal decomposition of the lower hydrocarbon in the reaction system and causing the lower hydrocarbon to contact the unsupported catalyst.

12. The battery material manufacturing method according to claim 10, wherein
in the process of generating the conductor,
the unsupported catalyst is temporarily captured by a capturing member,
the captured unsupported catalyst is caused to contact lower hydrocarbon,
a starting point from which nanocarbon grows is caused to be formed on a surface of the unsupported catalyst, and
the unsupported catalyst where the starting point is formed is released.

13. The battery material manufacturing method according to claim 10, wherein the kneader performs the kneading by a twin screw as the kneading screw.

14. The battery material manufacturing method according to claim 10, wherein the kneaded material is fed into a sheet molding machine to mold a sheet-like battery material.

15. The battery material manufacturing method according to any one of claims 10 to 13, comprising:
molding the softened battery material into a sheet shape by a sheet molding machine to send out the molded battery material; and
further rolling, by a rolling apparatus, the sheet-like battery material, to manufacture a continuously molded sheet-like battery material having a thickness from 0.01 mm to 3 mm and a width of 100 mm or more.

16. A battery material manufacturing system comprising:
a conductor supply port configured to receive a conductor generated by causing nanocarbon to grow on an unsupported catalyst;
a resin supply port configured to receive a resin;
a kneading screw configured to extrude the conductor and the resin that have been received on a downstream side while kneading the conductor and the resin; and
a kneaded material sending-out port configured to send out a kneaded material obtained by kneading the conductor and the resin on the downstream side,
wherein the conductor supply port receives the conductor in such a way that a rate of the conductor becomes 60 to 90 wt% of the kneaded material.

17. The battery material manufacturing system according to claim 16, wherein
in the process of generating the conductor,
a reaction system is further comprised, the reaction system comprising:
a fluid supply port configured to eject lower hydrocarbon to be caused to contact the unsupported catalyst; and
a capturing member configured to temporarily capture the unsupported catalyst and release the unsupported catalyst after a starting point from which nanocarbon grows is caused to be formed on a surface of the captured unsupported catalyst.

18. The battery material manufacturing system according to claim 16, wherein the kneaded material sending-out port sends out the kneaded material with a volume resistivity of less than 1.0 × 10⁶ Ω·m.

19. The battery material manufacturing system according to claim 16, wherein the kneading screw is a twin screw.

20. The battery material manufacturing system according to claim 16, wherein the kneaded material sending-out port sends out the kneaded material containing 5 volume % or more of carbon nanotubes having a length of 0.5 µm or more.

21. The battery material manufacturing system according to any one of claims 16 to 20, further comprising a sheet molding machine for generating a sheet-like battery material, the sheet molding machine comprising:
a kneaded material supply port configured to receive the kneaded material;
an expanding part configured to guide the received kneaded material in the sending-out direction while expanding the received kneaded material in a direction perpendicular to the sending-out direction; and
a sending-out port, which is a slit-like opening, capable of continuously sending out the kneaded material guided in the sending-out direction from the expanding part.

22. The battery material manufacturing system according to claim 21, wherein the sheet molding machine manufactures a continuously molded sheet-like battery material having a thickness from 0.01 mm to 3 mm and a width of 100 mm or more.

23. The battery material manufacturing system according to claim 21, wherein the sheet molding machine manufactures a sheet-like battery material with a volume resistivity in a thickness direction of less than 1.0 × 10⁶ Ω·m.
